# EUROPEAN PATENT SPECIFICATION

(11) **EP 2 463 324 B1**
(45) Date of publication and mention of the grant of the patent: **12.04.2017**
(21) Application number: 10194277.9
(22) Date of filing: 09.12.2010
(51) Int. Cl.: C08G 73/02

(54) **Organic polyelectrolyte, composition comprising it and their use for removing pollutants from water**
Organisches Polyelektrolyt, Zusammensetzung damit und Verwendung davon zur Entfernung von Verunreinigungen aus Wasser
Polyélectrolyte organique, composition la comprenant et son utilisation pour supprimer les polluants de l'eau

(43) Date of publication of application: 13.06.2012
(73) Proprietor: Cromogenia Units, S.A., 08040 Barcelona (ES)
(72) Inventor: Torrelles Nogues, Antonio, 08014, BARCELONA (ES); Gil Cano, Salvador, 08014, BARCELONA (ES)
(74) Representative: Oficina Ponti, SLP

(56) References cited:
- MIHAI MARCELA ET AL: "Application of polycations in separation processes", ENVIRONMENTAL ENGINEERING AND MANAGEMENT JOURNAL, TECHNICAL UNIVERSITY GH. ASACHI, IASI, vol. 6, no. 5, 1 September 2007 (2007-09-01), pages 419-423, XP009148278, ISSN: 1582-9596
- DRAGAN STELA ET AL: "Cationic polyelectrolytes. Xi. Polymers with quaternary N-atoms in the main chain obtained by condensation polymerization of epichlorohydrin with amines", ANGEWANDTE MAKROMOLEKULARE CHEMIE. APPLIED MACROMOLECULARCHEMISTRY AND PHYSICS, WILEY VCH, WEINHEIM, DE, vol. 192, no. 3317, 1 January 1991 (1991-01-01), pages 199-211, XP009148266, ISSN: 0003-3146, DOI: DOI:10.1002/APMC.1991.051920116

## Description

### Field of the invention

The present invention relates to the field of the treatment of water.

### Background of the invention

Wastewater is any water that has been adversely affected in quality by anthropogenic influence. It comprises liquid waste discharged by domestic residences, commercial properties, industry, and/or agriculture and can encompass a wide range of potential pollutants and concentrations. In the most common usage, it refers to the municipal wastewater that contains a broad spectrum of pollutants resulting from the mixing of wastewater from different sources. As it is well-known, it is very important to perform a good treatment over water, in particular wastewater, in order to reduce the amount of pollutants and thereby achieving water fit for consumption.

Wastewater usually contain phosphorous compounds: phosphates, which are the most important part among phosphorous-containing compounds and usually coming from surfactants and cleaning products; phosphonates, used as agrochemical products; and other phosphorous-containing compounds coming from dumping from slaughterhouses. These phosphorous-containing compounds must be removed before reaching fluvial channels in order to avoid serious problems of eutrophication (nutrient enrichment in an ecosystem).

The content of phosphorous in wastewater has been quantified between 0.65 and 0.95 kg per habitant and year. The processes applied for removing phosphorous in wastewater are chemical and/or biological processes, although in most of plants for treating wastewater physic-chemical processes are followed. By means of these treatments, the amount of phosphorous in dumped water can be lowered until 0.05 kg per habitant and year. (See Balmer et al., Proceedings International Fertiliser Society (2006), 591, 1-16.)

The chemical processes for removing phosphorous from waster water are based on the formation of precipitates by the flocculating action of iron and aluminium salts, such as ferric chloride and aluminium chloride or sulphate. The pathways of this action has been accepted to be the precipitation of iron phosphate and its adsorption into colloids formed by complex iron or aluminium hydroxides generated in the aqueous media during the treatment. (See Baker et al., Conference Proceeding, Annual Tech. Exhib & Conference 79th, Dallas (Texas), October 21-25 (2006)).

For removing phosphorous by using iron or aluminium salts, molar ratios Fe/P = 1-3,9 are used, which involves a dose until 300 mg/ml expressed as metal. In generally, for removing 1 mg/ml of phosphorous, 30 to 60 mg/ml of iron chloride is needed. (See, Takacs et al., Water Science and Technology (2006), 53(12), 21-28) and Baker et al., Proceedings of the Annual Conference of the Western Canada Water & Wastewater association (1998), 57^{th}).

By increasing or lowering the dosage for Fe (III), suitable levels of phosphorous can be achieved in order to proceed to dump the treated wastewater (water dumped to fluvial channels must contain a maximum of 1 mg/kg of phosphorous species if coming from treatment plants in towns with more than 100.000 inhabitants or a reduction in 80% between entry and exit; for towns with more than 10.000 inhabitants but less than 100.000 until 2 ppm of phosphorous species are permitted, but applying the same 80% reduction). The use of excess ferric chloride to guarantee the total removal of phosphorous, presents several drawbacks such as the coloration of water due to the presence of iron and more time for decantation of the already formed colloids, even if organic polyelectrolytes are used (see below about these compounds). In the treatment of wastewater by physic-chemical treatment the main purpose is performing said treatment with a minimal amount of reagents and maximum efficiency.

In order to avoid an excess accumulation of wastewater to be treated it is interesting that the flocculating additives have the highest possible sedimentation velocity, generate a big floccule, allow a fast decantation and that the separated sludge have the least possible amount of water. These three parameters: floccule size, decantation velocity and amount of water in the sludge are strongly influenced by the type of organic polyelectrolyte being used.

As shown above, it is also well-known that the presence of organic polyelectrolytes (see David A. Mortimer, Polymer Internat. (199), 25, 29-41) helps to coagulate the colloids formed by iron or aluminium hydroxides in water, where phosphorous compounds are absorbed to and probably other pollutants present in water, allowing its decantation and further separation as sludge.

The organic polyelectrolytes usually employed in this field are:
- Polyamines: in particular, those obtained by homopolymerization of the intermediate from the reaction between epichlorohydrin and dimethylamine.
- Poly-(diallyl dimethyl ammonium chloride) (PoliDADMAC) obtained by radicalary polymerization with diallyl dimethyl ammonium chloride.

US 3.953.330 discloses cationic polymers soluble in water which alone or in conjunction with coagulant aids are useful for flocculating or coagulating matter suspended in aqueous systems. In contrast with the organic polyelectrolyte used in the present invention, due to the different way of adding epichlorohydrin and reaction conditions, the polyelectrolyte obtained is different both structurally and in properties. Among these properties it is remarkable to mention that the product obtained in US 3.953.330 must be stabilized by lowering pH between 2 and 5 and only suspended matter can be flocculated or coagulated, whereas in the organic polyelectrolyte of the present invention there is no need for lowering said pH and even matter which is in solution can be flocculated or coagulated.

In order to obtain the cationic polymer disclosed in US 3.953.330, DMAPA (Dimethylaminopropylamine) is reacted with epichlorhydrin with molar ratios 1:1 at 90°C, followed by the addition of epichlorhydrin within a short time and the final adjustment of viscosity by addition of small amounts of epichlorohydrin. The rest of reaction conditions applied are indicated in US 3.953.330. The resulting polymer is close to its gel point. For this reason, in order to avoid the gel formation with the time, or even during the reaction, the polymer must be stabilized by an acid addition, like sulphuric acid, until a minimum of pH 2, where the amino groups are protonated as amine salt, and then they are not able to react with chlorinated carbons, and/or epoxy groups, by inter or intramolecular N-alkylation reactions.

The present invention discloses in particular an organic polyelectrolyte produced by reacting DMAPA with epichlorohydrin between 50 and 60°C, with a slow addition flow of epichlorohydrin over DMAPA during a minimum of 10 hours. The polyelectrolyte obtained is in an almost steady-state, where there is a regular polymer chain formation. By working in these conditions we have surprisingly found the following benefits:
a) The polymer is stable along time, there is no need of a final pH adjustment, as indicated above.
b) The gel point is not located at the same point as the molar ratio 1:1 between DMAPA and epichlorohydrin reaction at 90°C. It is possible, under the above mentioned reaction conditions for the present polyelectrolyte, to arrive at a molar ratio 1:1.15 DMAPA:epichlorohydrin at the new gel point. Therefore, a broader range of molar ratios is possible without gelation problems.
c) Under the above mentioned reaction conditions for the present polyelectrolyte, working preferably with molar ratios from 0.97:1 to 1:1 of epichlorohydrin:DMAPA, it is easy to prepare, with good reproducibility, a polymer with a brookfield viscosity around 2000 cPs for a 50% of active content, and with good properties as flocculant for wastewater treatment. If a higher viscosity is needed, the molar ratio in epichlorhydrin must be increased, for example 1:1.05 of DMAPA and epichlorohydrin, but only following the procedure of slow flow addition of epichlorhydrin at 55°C.
d) Colour assessment in Hazen scale is lower and always lower than 100 Hazen. The polymer obtained in US 3.953.330 has a colour assessment higher than 100 Hazen for the same active content of 50%.

In view of above, the present inventors provide a new polyelectrolyte useful for removing pollutants from water which can also be used in a composition for treating water, in particular wastewater, which at the same time allows to reduce the amount of iron or aluminium salt, lower the amount of reagents used and increase the efficiency for removing pollutants, in particular phosphorous species.

The present inventors have also surprisingly found that by replacing the 50% by weight of the iron or aluminium salt usually used in the art with a 5% of the organic polyelectrolyte (i.e. reducing the amount of salt in 50% and using just 1/10 of the organic polyelectrolyte apparently needed), the amount of pollutants are lowered, in particular phosphorous, and there is a lower production of sludge due to the decreased consumption of the salt. The amount of water is generally also lowered.

The first object of the present invention relates to a new organic polyelectrolyte useful for removing pollutants from water and which can also be used in a composition according to the second object of the present invention.

A second object of the present invention relates to a composition which provides several advantages in respect with the currently systems used for the treatment of water, e.g. reduction of CDO, reduction of solids in suspension, increase of the sedimentation velocity, reduction of the contribution of inorganic salts, reduction of the "occluded water" effect, reduction of the corrosive inorganic salt consumption, among others.

An even further object of the present invention relates to a process which uses the products according to first and second object for the treatment of water, in particular wastewater, in order to remove its pollutants, in particular phosphorous species.

An even further object of the present invention relates to the use of the products according to first and second object for removing pollutants from water, in particular phosphorous species.

### Brief description of drawings:

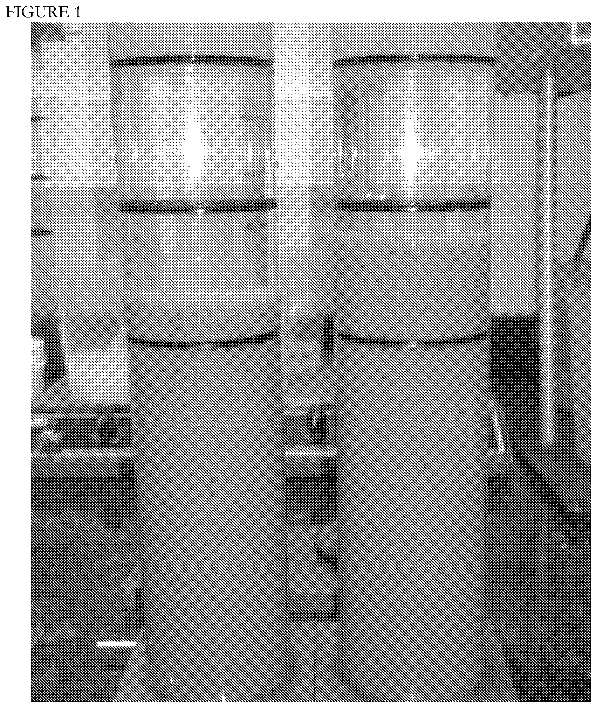

Figure 1 shows on the right a higher decantation rate for sample A (present invention) which is referred to in the comparative example and on the left a lower decantation rate for sample B (comparative product from US 3.953.330, see also above).

### Summary of the invention

The present invention relates to an organic polyelectrolyte obtained by the reaction of dimethylaminopropylamine (DMAPA), optionally blended with ethylenic amines, with epichlorohydrin, in a molar ratio (compounds containing amines:epichlorhydrin) between 1:0.95 and 1:1.15 characterised in that the addition of epichlorohydrin is carried out for a minimum of 10 hours at a temperature between 50 and 60°C.

The present invention also relates to a composition comprising a metal salt and an organic polyelectrolyte according to the present invention.

The present invention further relates to a process comprising the step of adding the polyelectrolyte or the composition according to the present invention for removing pollutants from water.

The present invention further relates to the use of the polyelectrolyte or the composition according to the present invention for removing pollutants in water

### Detailed description of the invention

### Definitions

The present invention will be more clearly understood after defining the following terms:
By "wastewater" is taken to mean as defined in the background section, i.e. any water that has been adversely affected in quality by anthropogenic influence. It comprises liquid waste discharged by domestic residences, commercial properties, industry, and/or agriculture and can encompass a wide range of potential pollutants and concentrations. In the most common usage, it refers to the municipal wastewater that contains a broad spectrum of pollutants resulting from the mixing of wastewaters from different sources. This term also includes "sewage water" which is correctly the subset of wastewater that is contaminated with feces or urine, but is often used to mean any waste water. "Sewage" includes domestic, municipal, or industrial liquid waste products disposed of, usually via a pipe or sewer or similar structure, sometimes in a cesspool emptier.

By "phosphorous" or "phosphorous species" is taken to mean all possible compounds containing at least one atom of phosphorous. In particular said phosphorous species is phosphate or phosphonate.

The words "organic polyelectrolyte", "polyeletrolyte" or "polymer" are used interchangeably in the present disclosure when referred to the first object of the present invention.

### Description

The present invention relates to an organic polyelectrolyte obtained by the reaction of dimethylaminopropylamine (DMAPA), optionally blended with ethylenic amines, with epichlorohydrin, in a molar ratio (compounds containing amines:epichlorohydrin) between 1:0.95 and 1:1.15 characterised in that the addition of epichlorohydrin is carried out for a minimum of 10 hours at a temperature between 50 and 60°C, preferably said molar ratio is between 1:0.97 and 1:1.15. Instead of DMAPA, any of its derivatives, for example, Tris-DMAPA, may be used.

In a preferred embodiment said organic polyelectrolyte is obtained by the reaction of a blend of dimethylaminopropylamine (DMAPA) and ethylenic amines, with epichlorohydrin.

Said ethylenic amines can be any ethylenic amines, but from a practical point of view of manufacturing, feasibility and prize, the more preferred ones are selected from the group consisting of EDA (ethylenediamine), DETA (diethylenetriamine), TETA (triethylenetetramine), TEPA (tetraethylenepentamine) and EAAA (aminoethylethanolamine), or a mixture thereof. More preferably said ethylenic amine is DETA.

The presence of ethylenic amines renders the polymer even more active, in particular when used in a composition for removing phosphorous species from waste water.

When the polyelectrolyte according to any of the previous embodiments is obtained by using ethylenic amines, they are preferably in a ratio (expressed in terms of molar fraction) ethylenic amines/(ethylenic amines + DMAPA) from 0.1 to 0.9, preferably the ratio is between 0.2 and 0.4. In an advantageous preferred embodiment, the blend consists of 0.25 mol DETA and 0.75 mol DMAPA.

Obviously, when these ethylenic amines are not used for obtaining the polyelectrolyte, the molar ratio referred as (compounds containing amines: epichlorohydrin) is equivalent to (DMAPA: epichlorohydrin).

The present invention also relates to a composition comprising a metal salt and an organic polyelectrolyte according to any of the preceding embodiments, i.e. the present invention relates to a composition comprising a metal salt and an organic polyelectrolyte obtained by the reaction of dimethylaminopropylamine (DMAPA), optionally blended with ethylenic amines, with epichlorohydrin, in a molar ratio (compounds containing amines:epichlorohydrin) between 1:0.95 and 1:1.15 characterised in that the addition of epichlorohydrin is carried out for a minimum of 10 hours at a temperature between 50 and 60°C, preferably said molar ratio is between 1:0.97 and 1:1.15. The present composition preferably comprises a metal salt and an organic polyelectrolyte obtained by the reaction of a blend of dimethylaminopropylamine (DMAPA) and ethylenic amines, with epichlorohydrin (all the possible embodiments of ethylenic amines disclosed above when referred to the organic polyelectrolyte are also incorporated when said organic polyelectrolyte is part of a composition).

In a preferred embodiment, the composition according to the present invention has a weight ratio polyelectrolyte:metal salt about 1:10.

The metal salt used in all the embodiments of the composition of the present invention is selected from iron and aluminium salts, or a mixture thereof. Preferably, said iron and aluminium salts are selected from iron chloride, aluminium chloride, iron sulphate, aluminium sulphate, sodium aluminate, or a mixture thereof.

One of the main advantages of the present composition is that it is possible to replace the 50% by weight of the iron or aluminium salt normally employed in the compositions used in the art with a 5% by weight of organic polyelectrolyte (i.e. reducing the amount of salt in 50% and using just 1/10 of the organic polyelectrolyte usually needed).

The present invention further relates to a process for removing pollutants from water comprising the step of adding a polyelectrolyte according to the present invention (including all the embodiments disclosed above) or a composition according to the present invention (including all the embodiments disclosed above) to water. Preferably, said water is wastewater. In a preferred embodiment, said pollutant is a phosphorous specie as defined herein. As it will be appreciated by those skill in the art said process will also encompass other steps already known in the art, such as:
- Trials at laboratory or pilot plant scale for a previous study
- Dosage of additives for the treatment
- Flocculation and decantation of sludges with these additives.
- Separation of sludges from treated water
- Analysis of treated water and dumping if parameters are optimal

The present invention also relates to the use of a polyelectrolyte according to the present invention (including all the embodiments disclosed above) or a composition according to the present invention (including all the embodiments disclosed above) for removing pollutants in water. Preferably, said water is wastewater. In a preferred embodiment, said pollutant is a phosphorous specie as defined herein.

### Examples

The following examples are provided in order to illustrate and better understand the present invention and are not intended to be limiting the invention. Also, a brief theoretical explanation is provided about the reaction mechanism inferred from the results.

### 1.- Preparation of polyamines:

### Example 1.1: Preparation of a polyamine by reaction between dimethylaminopropylamine and epichlorohydrin in a molar ratio 1:1

### Composition:

| | |
|---|---|
| Dimethylaminopropylamine | 102 g |
| Epichlorohydrin | 92 g |
| Water | 194 g |

Dimethylaminopropylamine and water are loaded in a three-necked flask, provided with shaking, condenser, addition funnel and heater, heated at 55°C and epichlorohydrin is added within 10 hours at the same ratio, keeping the temperature at 55°C, and is allowed to complete under these conditions until the content of chloride ion titrated against silver nitrate is 9.1%. A slightly yellow liquid is obtained with a Brookfield viscosity from 800 to 2400 cPs depending on flow changes of epichlorohydrin during the reaction in the above conditions. For preparations with large amounts of reagents, for example in the order of several kg in a pilot plant, the viscosity of polymer may be controlled with more accuracy by pumping epichlorodrydrin at a constant flow.

### Example 1.2: Preparation of a polyamine by reaction between dimethylaminopropylamine and diethylenetriamine, which molar fraction in diethylenetriamine is 0.1, and epichlorohydrin in a molar ratio 1:1

### Composition:

| | |
|---|---|
| Dimethylaminopropylamine (0.9 mols) | 91.8 g |
| Diethylenetriamine (0.1 mols) | 10.3 g |
| Epichlorohydrin | 92 g |
| Water | 194 g |

Dimethylaminopropylamine, diethylenetriamine and water are loaded in a three-necked flask, provided with shaking, condenser, addition funnel and heater, heated at 55°C and epichlorohydrin is added within 10 hours, keeping the temperature at 55°C. The reaction is allowed to complete under these conditions until the content of chloride ion titrated against silver nitrate is 9.1%. A yellowish liquid is obtained with a Brookfield viscosity from 900 to 2500 cPs.

### Example 1.3: Preparation of a polyamine by reaction between dimethylaminopropylamine and diethylenetriamine, which molar fraction in diethylenetriamine is 0.2, and epichlorohydrin in a molar ratio 1:1

### Composition:

| | |
|---|---|
| Dimethylaminopropylamine (0.8 mols) | 81.6 g |
| Diethylenetriamine (0.2 mols) | 20.6 g |
| Epichlorohydrin | 92 g |
| Water | 194 g |

Dimethylaminopropylamine, diethylenetriamine and water are loaded in a three-necked flask, provided with shaking, condenser, addition funnel and heater, heated at 55°C and epichlorohydrin is added within 10 hours, keeping the temperature at 55°C. The reaction is allowed to complete under these conditions until the content of chloride ion titrated against silver nitrate is 9.1%. A yellowish liquid is obtained with a Brookfield viscosity from 900 to 2500 cPs.

### Example 1.4: Preparation of a polyamine by reaction between dimethylaminopropylamine and diethylenetriamine, which molar fraction in diethylenetriamine is 0.333, and epichlorohydrin in a molar ratio 1:1

### Composition:

| | |
|---|---|
| Dimethylaminopropylamine (0.666 mols) | 67.9 g |
| Diethylenetriamine (0.333 mols) | 34.3 g |
| Epichlorohydrin | 92 g |
| Water | 194 g |

Dimethylaminopropylamine, diethylenetriamine and water are loaded in a three-necked flask, provided with shaking, condenser, addition funnel and heater, heated at 55°C and epichlorohydrin is added within 10 hours, keeping the temperature at 55°C. The reaction is allowed to complete under these conditions until the content of chloride ion titrated against silver nitrate is 9.1%. A yellowish liquid is obtained with a Brookfield viscosity from 900 to 2500 cPs.

### Example 1.5: Preparation of a polyamine by reaction between dimethylaminopropylamine and triethylenetetramine, which molar fraction in triethylenetetramine is 0.666, and epichlorohydrin in a molar ratio 1:1

### Composition:

| | |
|---|---|
| Dimethylaminopropylamine (0.333 mols) | 34 g |
| Triethylenetetramine (0.666 mols) | 97.3 g |
| Epichlorohydrin | 92 g |
| Water | 223.3 g |

Dimethylaminopropylamine, triethylenetetramine and water are loaded in a three-necked flask, provided with shaking, condenser, addition funnel and heater, heated at 55°C and epichlorohydrin is added within 10 hours, keeping the temperature at 55°C. The reaction is allowed to complete under these conditions until the content of chloride ion titrated against silver nitrate is 7.9%. A yellowish liquid is obtained with a Brookfield viscosity from 900 to 2500 cPs.

For both dimethylaminopropylamine and ethylenic amines (diethylenetriamine and triethylenetetramine), when reacting with epichlorohydrin, the values of chloride ion observed even at room temperature and with enough time are those equivalent to the epichlorohydrin used, but the recorded viscosities are low, usually lower than 10 cPs for a solid content of 50%. This fact allows to postulate that the reaction is produced in two steps:
1) nucleophilic attack from the electron pair in one of the nitrogen atoms in the amine group, preferably the primary amine, over the epoxi group in the epichlorohydrin, resulting in the addition product amino methylen halohydrin, which in aqueous, basic and concentrated media where it is generated, reverts back to epoxy with the removal of chloride ion.
2) The amino-epoxy monomers thus formed are polymerized by the same above mechanism for giving the polyamine.
3) Scheme of polymerization mechanism:

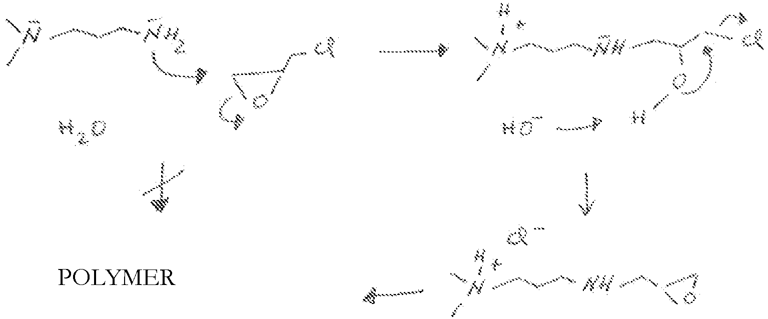

By increasing the amount of epichlorohydrin beyond the used molar ratio 1:l, it can be seen that generally a gel is obtained when the molar ratio is 1.15 epicholohydrin mols: 1 amine(s) mols. The ratio used 1:1 is safe because it is still far from stoichiometry producing a gel and in view of results it seems suitable for the purpose of the present invention.

### 2. Total Phosphorus Determination

The determination of total phosphorus has been performed under UNE EN-1189 (1997), which is the Spanish version of the European EN 1189 (1996), which is based on ISO 6878-1:1986. The amount of phosphorus is determined by a spectrophotometric procedure based on the formation of a blue complex between ortophosphate and ammonium heptamolybdate in the assay conditions.

It should be noted that what is actually determined is the ortophosphate ion. All phosphorous compounds are previously converted into ortophosphate. Polyphosphates should be previously hydrolized. Organophosphorates compounds must be oxidized and mineralised. The result obtained in these conditions corresponds to the total amount of phosphorus in the sample to be assayed.

In the event that only ortophosphate is present, or only ortophosphate is intended to be determined, leaving out hydrolysis, oxidation and mineralisation treatments, it has been observed that the organic flocculant used, in particular that from example 1, interferes with the reagent heptamolybdate, resulting in a precipitate.

In the assays performed to determine the total amount of phosphorous it has systematically proceeded to an oxidation and mineralisation in order to remove the interference by the organic flocculant, even in those where it was known that phosphorous was only in the form of ortophosphate.

In the following examples several parameters are used in order to prove the advantages of using the composition according to the present invention vs compositions from prior art.

COD (chemical oxygen demand): Standard method for indirect measurement of the amount of pollution (that cannot be oxidized biologically) in a sample of water. COD test procedure is based on the chemical-decomposition of organic and inorganic contaminants, dissolved or suspended in water. The result of a COD test indicates the amount of water dissolved oxygen (expressed as parts per million or milligrams per liter of water) consumed by the contaminants, during two hours of decomposition from a solution of boiling potassium dichromate. Higher the COD, higher the amount of pollution in the test sample
Floccule size: Floccules are obtained by colloid aggregation measuring the mean diameter size. Higher the diameter, faster the decantation. In the assays where it was not possible to obtain the accurate measurement, it is been expressed as the classification in size, being 1 the biggest floccules.
Sedimentation velocity: Floccules deposits by action of gravity, since the rest of involved forces get lower as the floccule becomes bigger.
NTU: (Nephelometric Turbidity Unit)Unity of turbidity measured by a nephelometer. Turbidity is the cloudiness or haziness of a fluid caused by individual particles (suspended solids) that are generally invisible to the naked eye, similar to smoke in air. The measurement of turbidity is a key test of water quality.
Clarity: Free of turbidity

### Example 2.1 Efficiency for removing phosphorous using PAC18% (18% w/w aluminium chloride)

| sample | Product 1 | dose (1/h) | Product 2 | dose (1/h) | Total Phosphorous (ppm) | COD | Floccule size |
|---|---|---|---|---|---|---|---|
| 1 | PAC18% | 65 | | | 0,71 | 1738 | 3,0-4,5mm |
| 2 | PAC18% | 30 | Example 1.1 | 3 | 0,41 | 1616 | 4,5-6,5mm |

Concentration PAC18: 100% COMMERCIAL
PRODUCT
Concentration product 2 35%: 100%
COMMERCIAL PRODUCT
Volume: 100m³/h
Place: ETARI LECHE PASCUAL
Dosage point: Entry into physic-chemical previous to biological
Data: 28 June 2010

Objective: Industrial assay replacing 50% of aluminium polichloride with 5% of product from Example 1.1.
Results: In the presence of product of example 1.1 the total phosphorous removal and floccule are improved (see figure 2).

### Example 2.2 Efficiency for removing phosphorous using less ferric chloride

| sample | Product 1 | dose (ppm) | Product 2 | dose (ppm) | Total Phosphorous (ppm) | Sedimen -tation velocity | Floccule size |
|---|---|---|---|---|---|---|---|
| 1 | BLANK | | | | 19 | | |
| 2 | FeCl₃ | 1000 ppm | | 20 ppm | 1.6 | - | 1.5-2.2 mm |
| 3 | FeCl₃ | 500 ppm | Example 1.1 | 50 ppm | 0.2 | + | 3.0-4.5 mm |

Concentration FeCl₃: 10%
Concentration Product 2: 1%
Sample Volume: 800 cm³
Place: ETARI Frigorifics Costa Brava
Collection point: Decantation exit previous to tertiary sedimentation
Data: 13 May 2010

Objective: Reducing FeCl₃ dosage at 50% and using instead 5% of product from example 1.1. Evaluate total amount of phosphorous.
Results: The replacement of 50% of FeCl₃ with 5% of product from Example 1.1 improves the removal of total phosphorous.

### Example 2.3 Synergism between ferric chloride and product from examples 1.1. and 1.2 for removing phosphorous

| sample | Product 1 | Dose (ppm) | Product 2 | dose (ppm) | Total Phosphorous (ppm) | Sedimen -tation velocity | Floccule size (mm) |
|---|---|---|---|---|---|---|---|
| 1 | FeCl₃ | 350 | | | 0.1 | 7th | 0.3-0.5 |
| 2 | Example 1.1 | 12.5 | | | 3 | 3rd | 1.0-1.5 |
| 3 | Example 1.2 | 12.5 | | | 2.9 | 4th | 0.75-1.0 |
| 4 | FeCl₃ | 125 | Example 1.1 | 12.5 | 0.4 | 5th | 0.75-1.0 |
| 5 | FeCl₃ | 125 | Example 1.2 | 12.5 | 0.1 | 6th | 0.5-0.75 |
| 6 | BLANK | | | | 3.1 | 8th | 0.3-0.5 |
| 7 | Example 1.1 | 24 | | | 3 | 1st | 1.5-2.25 |
| 8 | Example 1.2 | 24 | | | 2.6 | 2nd | 1.5-2.25 |

Concentration FeCl₃: 10%
Concentration Product 2: 1 %
Sample Volume: 500 cm³
Place: EDAR Martorell
Collection point: Aerobic biological exit previous to secondary sedimentation
Data: 14 May 2010

Objective: Reducing FeCl₃ dosage at 50% and using instead 5% of product from example 1.1 and 1.2. Evaluate total amount of phosphorous.
Results: A synergic effect for removing phosphorous is observed

### Example 2.4 Synergism between ferric chloride and product from examples 1.1, 1.3 and 1.4 for removing phosphorous

| sample | Product 1 | dose (ppm) | Product 2 | dose (ppm) | Total Phosphorous (ppm) | Sedimen -tation velocity | Floccule size (mm) |
|---|---|---|---|---|---|---|---|
| 1 | FeCl₃ | 40 | | | 1.8 | 3rd | 1.0-1.5 |
| 2 | Example 1.1 | 4 | | | 2.8 | 1st | 1.5-2.25 |
| 3 | Example 1.3 | 4 | | | 2.6 | 2nd | 1.0-1.5 |
| 4 | Example 1.4 | 4 | | | 2.1 | 1st | 1.5-2.25 |
| 5 | Example 1.1 | 2 | FeCl₃ | 20 | 1.6 | 2nd | 1.01.5 |
| 6 | Example 1.3 | 2 | FeCl₃ | 20 | 1.8 | 3rd | 0.75-1.0 |
| 7 | Example 1.4 | 2 | FeCl₃ | 20 | 1.4 | 4th | 0.75-1.0 |
| 8 | BLANK | | | | 2.8 | 5th | 0.5-0.75 |

Concentration FeCl₃: 10%
Concentration Example 1.1, 1.3, 1.4: 1%
Sample Volume: 500 cm³
Place: EDAR Martorell
Collection point: Aerobic biological exit previous to secondary sedimentation
Data: 9 June 2010

Objective: Reducing FeCl₃ dosage at 50% and using instead 5% of product from example 1.1, 1.3 and 1.4. Evaluate total amount of phosphorous.
Results: A synergic effect for removing phosphorous is observed

### Example 2.5 Synergism between ferric chloride and product from example 1.1 for removing phosphorous

| sample | Product 1 | dose (ppm) | Product 2 | dose (ppm) | Total Phosphorous (ppm) | NTU | Sedimentation velocity (cm/min) |
|---|---|---|---|---|---|---|---|
| 1 | Example 1.1 | 10 | | | 1.08 | 35 | 13.6 |
| 2 | FeCl₃ | 100 | | | 0.42 | 42 | 4.9 |
| 3 | POLIDA DMAC | 10 | | | 1.12 | 40 | 9.3 |
| 4 | FeCl₃ | 40 | Example 1.1 | 6 | 0.41 | 36 | 20 |
| 5 | Example 1.1 | 10 | | | 1.02 | 22 | 13.8 |

Concentration FeCl₃: 10%
Concentration Example 1.1 and POLIDADMAC: 1%
Sample Volume: 500 cm³
Place: EDAR Utiel
Collection point: Aerobic biological exit previous to secondary sedimentation
Data: February 2010
NTU: Nephelometric Turbidity Units

Objective: Reducing FeCl₃ dosage at 40% and using instead 6% of product from example 1.1. Evaluate total amount of phosphorous.
Results: A synergic effect for removing phosphorous is observed

### Example 2.6 Synergism between ferric chloride and product from example 1.1 for removing phosphorous

| sample | Product 1 | dose (ppm) | Product 2 | dose (ppm) | Total Phosphorous (ppm) | Sedimen tation velocity | Floccule size (mm) |
|---|---|---|---|---|---|---|---|
| 1 | FeCl₃ | 20 | | | 0.6 | 2nd | 1.5-2.25 |
| 2 | AlO₂Na | 10 | | | 0.6 | 1st | 2.25-3.0 |
| 3 | FeCl₃ | 10 | Example 1.1 | 1 | 0.6 | 3rd | 1.0-1.5 |
| 4 | AlO₂Na | 10 | Example 1.1 | 1 | 0.9 | 4th | 0.75-1.0 |
| 5 | BLANK | | | | 2.1 | | |

Concentration FeCl₃ and AlO₂Na: 1%
Concentration Example 1.1: 0.1%
Sample Volume: 500 cm³
Place: EDAR Tortosa
Collection point: Aerobic biological exit previous to secondary sedimentation
Data: 10 April 2010

Objective: Replace part of sodium aluminate with product from Example 1.1
Results: No synergic effect is observed when using sodium aluminate for removing phosphorous

### Example 2.7 Efficiency of product from Example 1.1 versus other organic polyelectrolytes

| sample | Product 1 | dose (ppm) | Product 2 | dose (ppm) | CDO | Clarity | Floccule size (mm) |
|---|---|---|---|---|---|---|---|
| 1 | PAC 18% | 100 | POLIDA DMAC | 10 | 681 | 4th | 0.3-0.5 |
| 2 | PAC 18% | 100 | POLYMI NE | 10 | 690 | 3rd | 0.5-0.75 |
| 3 | PAC 18% | 100 | Example 1.1 | 10 | 679 | 1st | 0.7-1.0 |
| 4 | PAC 18% | 100 | High viscosity polyamine | 10 | 681 | 2nd | 1.0-1.5 |

Concentration PAC 18: 10%
Concentration Example 1.1, polyamines and
POLIDADMAC: 1%
Sample Volume: 500 cm³
Place: ETARI Coren
Collection point: Homogenization exit previous to biological
Data: 19 May 2010

Objective: Improve the results of organic flocculants polyamine and POLIDADMAC by using the product from example 1.1, replacing 50% of the inorganic salt with 5% of the flocculant.
Results: The product of example 1.1 is a better flocculant producing more clear water and bigger floccule.

### Comparative example

With this example, the present inventors would like to show the differences between the polyelectrolyte used in the present invention and the polyelectrolyte obtained in US 3.953.330

Both polymers (polyelectrolytes) are prepared using a molar ratio of 1:097 of DMAPA and epichlorohydrin. Sample A (referred to the present invention) is prepared at 55°C adding epichlorohydrin in 10 hours. Sample B (referred to that in US 3.953.330) is prepared at 90°C adding the 90% of total epichlorohydrin within 1 hour, the rest of epichlorhydrin being added in several small amounts until completing the addition of epichlorhydrin. The total time is about four hours as much, as indicated in US 3.953.330.
Sample A is obtained directly as indicated above with an active solid content of 50%.
Sample B is adjusted at the same viscosity using a total amount of epichlorhydrin corresponding to a molar ratio 1:0,95 of DMAPA and epichlorhydrin. The registered difference is only 0,02 mol. The final adjustment of both samples at the same activity of 50% is made on one hand by solid content control and on the other hand by water content determination by Karl-Fischer method. Both polymers are analysed in order to compare them. The results are as follow:

| PARAMETER: | SAMPLE A | SAMPLE B |
|---|---|---|
| Total amine (1) (mgKOH/g) | 158.4 | 153 |
| Tertiary amine (1) (mgKOH/g) | 142.8 | 103 |
| Brookfield Viscosity (2) (cPs) | 2.200 | 2.200 |
| Chloride ion (3) (%) | 9.47 | 9,38 |
| Refractive index at 20°C | 1.4440 | 1.4450 |
| Monomer content by GC (4) | free | free |
| Sodium Laurylsulphate Flocculation test (5) | 2.46g/g | 2.24g/g |
| Clay Flocculation test (6) | + | - |
| Colour (Hazen) | 73 | 113 |

| | | |
|---|---|---|
| (1).- Total and tertiary amine is determined by titration with 0,1N perchloric acid in acetic acid solution, following the procedure indicated by S. Siggia, "Quantitative Organic Analysis via Functional Groups", John Wiley & sons, N.Y.1963 (2).- Viscosity is determined with a digital Brookfield viscosimeter at 20°C, spindle 3 and 0,5 rpm. (3).- Chloride is titrated with silver nitrate, using an ion selective electrode. (4).- Monomer content, is analysed using a Gas Chromatograph. In both samples no monomers are detected. (5).- An excess of Sodium Laurylsulphate 0,004 M is added over the polymer prepared in Sample A and Sample B. Some turbidity appears due to the flocculation of surfactant by the cationic polymer effect. After 2 hours, the precipitate is filtered off and the filtered solution is titrated with Hyamine 1622, as indicated in ISO 2271-1989 for the determination of anionic active matter by direct two phases titration. 0,7000 g of polymer (Sample A or Sample-B) is diluted to 1 litre with distilled water, an aliquot of 25 ml is taken and added over 25 ml of 0,004 M Sodium Larylsulfate. After two hours, the flocculation of the equivalent part of anionic surfactant in complete by the effect of cationic polymer. The excess of non-flocculated anionic surfactant is separated by filtration and titrated with 0,004 M Hyamine 1622, as indicated in ISO 2271-1989. By difference, it is easy to calculate the mEq of anionic surfactant flocculated per gram of polymer, or using the Molecular weight of Sodium Laurylsulfate (NaLS) (288 g/mol) it is possible to calculate the amount of grams of (NaLS) per gram of polymer. 6.- Flocculation Test with Clay: A dispersion of clay in water is treated with 10 mg of polymer (Sample A or Sample B) per Kg of water with clay dispersion. The decantation speed using Sample A is higher than Sample-B. See figure 1 showing the flocculation with clay for Sample A and Sample B | | |

Accordingly, there are differences between Sample A and Sample B in Tertyary amine value, refractive index, Sodium Laurylsulphate Flocculation test and Clay Flocculation test proving the different structure and properties between both samples.

## Claims

1. Organic polyelectrolyte obtained by the reaction of dimethylaminopropylamine (DMAPA), optionally blended with ethylenic amines, with epichlorohydrin, in a molar ratio (compounds containing amines:epichlorohydrin) between 1:0.95 and 1:1.15 **characterised in that** the addition of epichlorohydrin is carried out for a minimum of 10 hours at a temperature between 50 and 60°C.

2. Organic polyelectrolyte according to claim 1 obtained by the reaction of a blend of dimethylaminopropylamine (DMAPA) and ethylenic amines, with epichlorohydrin in a molar ratio (compounds containing amines:epichlorohydrin) between 1:0.95 and 1:1.15 **characterised in that** the addition of epichlorohydrin is carried out for a minimum of 10 hours at a temperature between 50 and 60°C.

3. Organic polyelectrolyte according to any of claims 1 or 2, wherein said ethylenic amines are selected from the group consisting of EDA, DETA, TETA, TEPA and EAAA, or a mixture thereof.

4. Organic polyelectrolyte according to any of the preceding claims, wherein the ratio as molar fraction ethylenic amines/(ethylenic amines + DMAPA) is from 0.1 to 0.9.

5. Organic polyelectrolyte according to claim 4, wherein said ratio is from 0.2 to 0.4.

6. Composition comprising a metal salt and an organic polyelectrolyte according to any of the preceding claims.

7. Composition according to claim 6, wherein the weight ratio of polyelectrolyte:metal salt is about 1:10.

8. Composition according to any of claims 6 or 7, wherein said metal salt is selected from iron and aluminium salts, or a mixture thereof.

9. Composition according to claim 8, wherein said iron and aluminium salts are selected from iron chloride, aluminium chloride, iron sulphate, aluminium sulphate, sodium aluminate, or a mixture thereof.

10. Process for removing pollutants from water comprising the step of adding the polyelectrolyte according to any of claims 1 to 5 or the composition according to any of claims 6 to 9 to water.

11. Use of the polyelectrolyte according to any of claims 1 to 5 or the composition according to any of claims 6 to 9 for removing pollutants in water.

12. Process according to claim 10 or use according to claim 11, wherein said water is wastewater.

13. Process according to any of claims 10 or 12 or use according to any of claims 11 or 12, wherein said pollutant is a phosphorous specie.

## Patentansprüche

1. Organisches Polyelektrolyt, das erhalten wird durch die Reaktion von Dimethylaminopropylamin (DMAPA), wahlweise gemischt mit Ethylen-Aminen, mit Epichlorhydrin in einem Molverhältnis (Verbindungen mit Aminen:Epichlorhydrin) zwischen 1:0,95 und 1:1,15, **dadurch gekennzeichnet, dass** die Zugabe von Epichlorhydrin minimal 10 Stunden lang bei einer Temperatur zwischen 50 und 60 °C ausgeführt wird.

2. Organisches Polyelektrolyt gemäß Anspruch 1, das erhalten wird durch die Reaktion einer Mischung aus Dimethylaminopropylamin (DMAPA) und Ethylen-Aminen mit Epichlorhydrin in einem Molverhältnis (Verbindungen mit Aminen:Epichlorhydrin) zwischen 1:0,95 und 1:1,15, **dadurch gekennzeichnet, dass** die Zugabe von Epichlorhydrin minimal 10 Stunden lang bei einer Temperatur zwischen 50 und 60 °C ausgeführt wird.

3. Organisches Polyelektrolyt gemäß einem der Ansprüche 1 oder 2, bei dem die Ethylen-Amine aus der Gruppe ausgewählt sind, die besteht aus EDA, DETA, TETA, TEPA und EAAA oder einer Mischung hieraus.

4. Organisches Polyelektrolyt gemäß einem der vorherigen Ansprüche, bei dem das Verhältnis als Molenbruch Ethylen-Amine/(Ethylen-Amine + DMAPA) zwischen 0,1 und 0,9 beträgt.

5. Organisches Polyelektrolyt gemäß Anspruch 4, bei dem das Verhältnis zwischen 0,2 und 0,4 beträgt.

6. Zusammensetzung mit einem Metallsalz und einem organischen Polyelektrolyt gemäß einem der vorherigen Ansprüche.

7. Zusammensetzung gemäß Anspruch 6, bei der das Gewichtsverhältnis von Polyelektrolyt:Metallsalz etwa 1:10 beträgt.

8. Zusammensetzung gemäß einem der Ansprüche 6 oder 7, bei der das Metallsalz aus Eisen- und Aluminiumsalzen oder einer Mischung hieraus ausgewählt ist.

9. Zusammensetzung gemäß Anspruch 8, bei der die Eisen- und Aluminiumsalze aus Eisenchlorid, Aluminiumchlorid, Eisensulfat, Aluminiumsulfat, Natriumaluminat oder einer Mischung hieraus ausgewählt sind.

10. Verfahren zum Entfernen von Verunreinigungen aus Wasser mit dem Schritt des Zugebens des Polyelektrolyts gemäß einem der Ansprüche 1 bis 5 oder der Zusammensetzung gemäß einem der Ansprüche 6 bis 9 zu Wasser.

11. Verwendung des Polyelektrolyts gemäß einem der Ansprüche 1 bis 5 oder der Zusammensetzung gemäß einem der Ansprüche 6 bis 9 zum Entfernen von Verunreinigungen in Wasser.

12. Verfahren gemäß Anspruch 10 oder Verwendung gemäß Anspruch 11, wobei das Wasser Abwasser ist.

13. Verfahren gemäß einem der Ansprüche 10 oder 12 oder Verwendung gemäß einem der Ansprüche 11 oder 12, wobei die Verunreinigung eine Phosphorspezies ist.

## Revendications

1. Polyélectrolyte organique obtenu par la réaction de diméthylaminopropylamine (DMAPA), optionnellement mélangée à des amines éthyléniques, avec de l'épichlorohydrine, dans un ratio molaire (composés contenant des amines:épichlorohydrine) compris entre 1:0,95 et 1:1,15 **caractérisé en ce que** l'ajout d'épichlorohydrine est réalisé pour un minimum de 10 heures à une température comprise entre 50 et 60°C.

2. Polyélectrolyte organique selon la revendication 1 obtenu par la réaction d'un mélange de diméthylaminopropylamine (DMAPA) et d'amines éthyléniques, avec de l'épichlorohydrine, dans un ratio molaire (composés contenant des amines:épichlorohydrine) compris entre 1:0,95 et 1:1,15 **caractérisé en ce que** l'ajout d'épichlorohydrine est réalisé pour un minimum de 10 heures à une température comprise entre 50 et 60°C.

3. Polyélectrolyte organique selon une quelconque des revendications 1 ou 2, dans lequel lesdites amines éthyléniques sont sélectionnées dans le groupe constitué d'EDA, DETA, TETA, TEPA et d'EAAA, ou d'un mélange de ceux-ci.

4. Polyélectrolyte organique selon une quelconque des revendications précédentes, dans lequel le ratio en fraction molaire amines éthyléniques/(amines éthyléniques + DMAPA) est compris entre 0,1 et 0,9.

5. Polyélectrolyte organique selon la revendication 4, dans lequel ledit ratio est compris entre 0,2 et 0,4.

6. Composition comprenant un sel métallique et un polyélectrolyte organique selon une quelconque des revendications précédentes.

7. Composition selon la revendication 6, dans laquelle le ratio en poids polyélectrolyteael métallique est d'environ 1:10.

8. Composition selon une quelconque des revendications 6 ou 7, dans laquelle ledit sel métallique est sélectionné parmi des sels ferreux ou d'aluminium, ou d'un mélange de ceux-ci.

9. Composition selon la revendication 8, dans laquelle lesdits sels ferreux et d'aluminium sont sélectionnés parmi le chlorure de fer, le chlorure d'aluminium, le sulfate de fer, le sulfate d'aluminium, l'aluminate de sodium, ou un mélange de ceux-ci.

10. Procédé de retrait de polluants de l'eau comprenant l'étape d'ajout du polyélectrolyte selon une quelconque des revendications 1 à 5 ou la composition selon une quelconque des revendications 6 à 9 à de l'eau.

11. Utilisation du polyélectrolyte selon une quelconque des revendications 1 à 5 ou la composition selon une quelconque des revendications 6 à 9 pour retirer les polluants de l'eau.

12. Procédé selon la revendication 10 ou utilisation selon la revendication 11, dans lequel/laquelle ladite eau est constituée d'eaux usées.

13. Procédé selon une quelconque des revendications 10 ou 12 ou utilisation selon une quelconque des revendications 11 ou 12 dans lequel/laquelle ledit polluant est une espèce phosphoreuse.
